# EUROPEAN PATENT APPLICATION

(11) **EP 4 826 597 A1**
(43) Date of publication of application: **21.10.2026**
(21) Application number: 26161479.6
(22) Date of filing: 27.02.2026
(51) Int. Cl.: G06N 3/063, G06N 3/045, G06N 3/0464, G06N 3/048

(54) **PROCESSING ELEMENT FOR A NEURAL NETWORK**

(30) Priority: 14.04.2025 GB 202505585
(71) Applicant: Fotonation Limited, County Galway H91D1KH (IE)
(72) Inventor: Munteanu, Mihai, Brasov (RO)
(74) Representative: Boyce, Conor

(57) **Abstract**

A processing element for a neural network comprises a plurality of adder units configurable into a one of a plurality of different tree configurations, each adder unit having two variable inputs and at least one control input determining a respective operation to be performed by the adder unit. The operation comprises one of: a sum or a comparison of the variable inputs. In at least one of the configurations, a first sub-set of the plurality of adder units are provided in a first layer of a tree for receiving the variable inputs and for performing a selected operation on the inputs, the units being configurable to provide outputs to a second sub-set of adder units of the tree, with a final sub-set of adder units providing at least one output for the configuration of adder tree.

## Description

### Field

The present invention relates to a processing element for a neural network including a reconfigurable adder tree.

### Background

European Patent No. EP3557486 (Ref: FN-626-EP), discloses a hardware neural network engine configured to receive at least one MxN window of floating point number values corresponding to a pixel of an input map and a corresponding set of MxN floating point number kernel values for a neural network layer of a neural network. A plurality of at least MxN floating point multipliers have a first operand input configured to be connected to an input map value and a second operand input configured to be connected to a corresponding kernel value. Pairs of multipliers within the MxN floating point multipliers provide respective floating point number outputs to respective input nodes of a tree of nodes, one output node of the tree providing a first input of an output module, and an output of one of the MxN floating point multipliers providing a second input of the output module. When the engine is configured to process a convolution layer of the neural network, each kernel value comprises a trained value for the layer, the nodes of the tree are configured to sum their inputs and the output module is configured to sum its first and second inputs, to apply an activation function to the sum and to provide an output of the activation function as an output of the output module. Each node of the tree is configured to provide a floating point number output corresponding to either: a larger of the inputs of the node; or a sum of the inputs, so that: when the engine is configured to process an average pooling layer of the neural network, each kernel value comprises a value corresponding to 1/(MxN), the nodes of the tree are configured to sum their inputs and the output module is configured to sum its first and second inputs and to provide the sum as the output of the output module; and when the engine is configured to process a max pooling layer of the neural network, each kernel values comprises a value equal to 1, the nodes of the tree are configured to output a larger of their inputs and the output module is configured to output a larger of its first and second inputs as the output of the output module.

Hanrui Wang, Zhekai Zhang, Song Han, "SpAtten: Efficient Sparse Attention Architecture with Cascade Token and Head Pruning", https://arxiv.org/html/2012.09852v3, discloses a Query-Key multiplication module with a reconfigurable adder tree which can output a variable number of partial sums according to the query vector's dimension.

It is an object of the present invention to extend the functionality yet reduce the footprint of processing elements including adder trees.

### Summary

According to the present invention there is provided a processing element for a neural network according to claim 1.

### Brief Description of the Drawings

Embodiments of the invention will now be described, by way of example, with reference to the accompanying drawings, in which:
Figure 1 illustrates an exemplary adder unit employed within a processing element of the present invention;
Figure 2 illustrates multiple configurations of adder tree within a processing element according to a first embodiment of the present invention;
Figure 3 illustrates the multiplexing employed for one "a" input of the adder units of the adder trees of Figures 2 and 4;
Figure 4 illustrates multiple configurations of adder tree within a processing element according to a second embodiment of the present invention; and
Figure 5 illustrates the multiplexing employed for the second "b" inputs of the adder trees of Figures 2 and 4.

### Detailed Description of the Embodiments

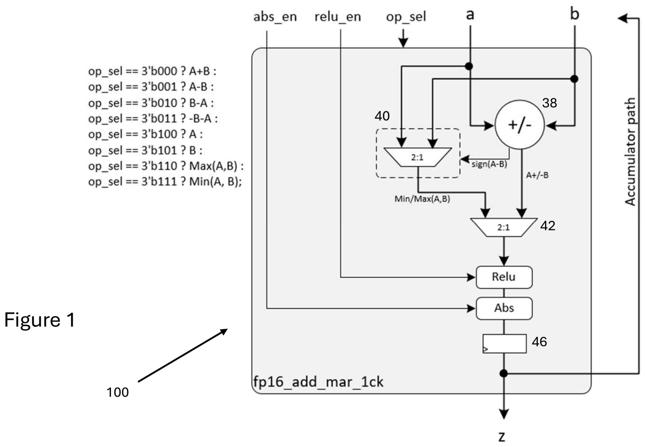

Referring now to Figure 1, there is shown an exemplary adder unit 100 employed within a processing element of the present invention. In this example, the adder unit 100 is configured to add, subtract or compare any two floating point numbers a,b as explained in more detail below.

Note however than in alternative embodiments of the invention, other forms of number could be employed, for example, integers or numbers in the POSIT format disclosed by Raul Murillo, Alberto A. Del Barrio, Guillermo Botella, Min Soo Kim, HyunJin Kim, Nader Bagherzadeh, "PLAM: A Posit Logarithm-Approximate Multiplier", https://arxiv.org/abs/2102.09262.

In the case of floating-point adders, as shown, a basic adder structure can be readily enhanced with more features/operations without adding many extra logic gates. The same enhanced operations can also be added to integer adders but would have a larger impact on the gate-count of the adder unit.

In the embodiment, the adder unit 100 exposes three configuration inputs that control the functionality applied to two variable inputs a,b as follows:
1. op_sel: Selects one of 8 possible operations. Figure 1 includes an exemplary table of 3-bit binary values for op_sel determining which of A+B, A-B, B-A, -B-A, A, B, Max(A,B), Min(A,B) respectively will be output by a first stage of the adder unit.
   Similar to the adder disclosed in EP3557486 referenced above, the first stage of the adder unit 100 comprises a multiplexer 42 controlled by op_sel to determine whether the output of a comparator 40, determining Min/Max(A,B), or the output of an adder 38 is provided to a second stage of the adder unit 100. The adder 38 is also controlled by op_sel to produce any of A+B, A-B, B-A, -B-A, A or B as its output. It will be appreciated that implementing these extra operations for floating-point operands adds only a few extra gates. For example, the first four operations A+B, A-B, B-A and -B-A can be achieved by only changing the sign bit of the operands, while the bypass operations for the A or B inputs simply pass one input or the other to the output of the adder 38. Again, the min/max operations use a comparator 40 typical of any floating-point adder.
2. relu_en: When set, a ReLU activation function is applied to the output of the multiplexer 42. For ReLU, the output is clamped to 0 if the result provided by the multiplexer 42 is negative. Note that other activation functions, such as PReLU could also be implemented at this stage as described in EP3557486 referenced above.
3. abs_en: When set, the absolute value of the output of the ReLU stage is produced. In the case of floating-point numbers, this is achieved by simply forcing the sign bit of the result to 0.

Finally, where op_sel is set to A, then the b input for the adder unit can be directed so that it is added to the contents of an output register 46 rather than the adder 38. This enables a non-zero bias value to be provided to the adder unit as input b and to be added to the output.

It will be appreciated that relu_en and abs_en (and possibly a bias value) are applied to the output of the first stage of the adder unit, so they can be applied to the output of any operation selected by op_sel value.

Note that, as each adder unit has a register output 46, each addition takes one clock cycle.

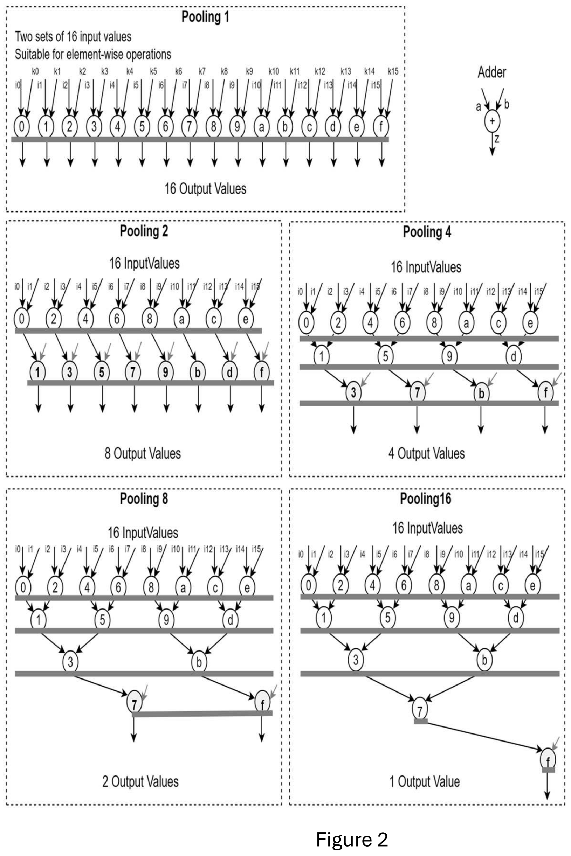

Referring now to Figure 2, there is shown multiple configurations of adder tree within a processing element according to a first embodiment of the present invention.

In the embodiment, the adder tree comprises 16 adder units 0...f, each corresponding to the adder unit 100 shown in Figure 1. As such, in this embodiment, all adder units of the tree are structurally identical, however, it will be appreciated that in alternative embodiments, it is possible for one or more of the adder units to differ from the others. Nonetheless, while the adder tree is suitable for any kind of data representation, e.g. integer or floating point, the data type should be the same throughout the adder tree. Also, while the embodiment comprises 16 units, in variations of the embodiment, more or fewer units could be employed.

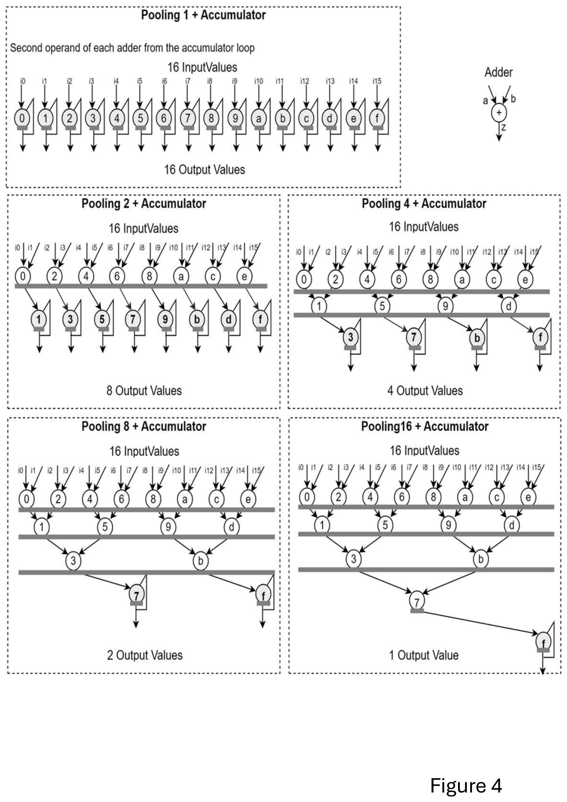

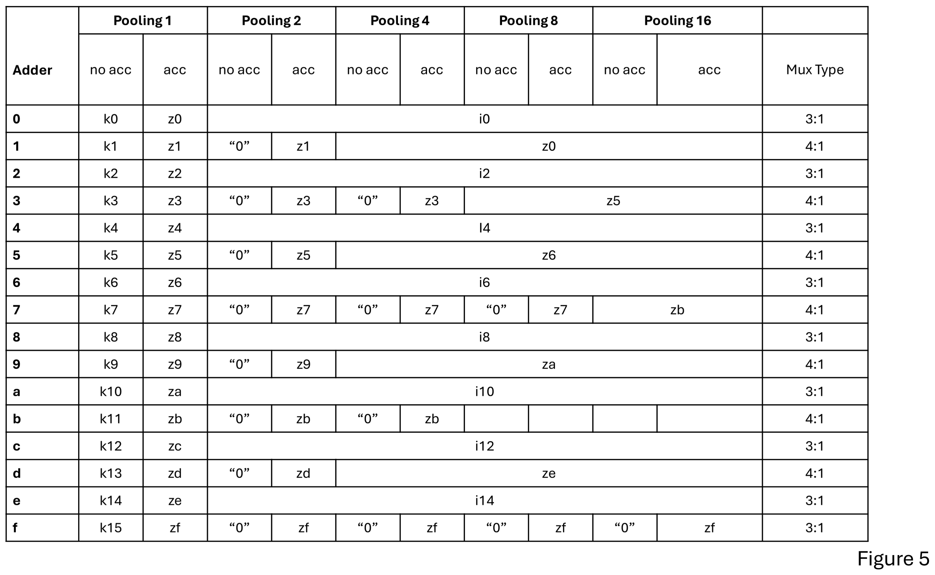

In any case, in a first configuration of the adder tree, Pooling 1, each adder unit 0...f has a pair of inputs a,b, with each unit producing an output z according to the settings of op_sel, relu_en and abs_en described in relation to Figure 1. In this configuration, inputs for each adder unit might comprise: values derived from respective input data, such as images, maps or feature vectors; bias values; weights derived from a kernel; the outputs of respective multipliers, as in the case of EP3557486 referenced above; or any combination of these. In any case, such a configuration provides limited pooling from a total of up to 32 inputs to up to 16 outputs. In other embodiments, such as described in more detail in relation to Figures 4 and 5, only one input of an adder unit might be derived from input data, kernel data or multiplier output with the other being derived from the output of the adder unit, to provide an accumulator (rather than pooling) function. In any case, where at least one input is derived from a multiplier output, the processing element itself can advantageously comprise a suitable number of multipliers, for example, allowing the processing element to perform the multiplications of an MxN convolution kernel to be performed in parallel, followed by the adder tree.

In each of a variety of further configurations of the adder units, the outputs of some adder units are provided as inputs to other adder units in order to form respective multi-layer tree configurations.

In a Pooling 2 configuration, 8 pairs of inputs are provided to every second adder unit 0,2,4,6,8,a,c,e with the outputs of these units being provided as one input to a respective alternating adder unit. This pools the output of the tree twice as much as in the Pooling 1 configuration. In this case, the op_sel operation selected for adder units 0,2,4,6,8,a,c,e can be any of A+B, A-B, B-A, -B-A, A, B, Max(A,B), Min(A,B), whereas the operation for adder units 1,3,5,7,9,b,d,f will typically be A. Again, as explained in relation to register 46 in Figure 1, for op_sel = A, a second non-zero input can be provided to each node of the final layer of the tree, so that these can perform more than a bypass function, i.e. to add a respective bias value to the output register 46 of the adder unit.

In the Pooling 4 configuration, 8 pairs of inputs are again provided to every second adder unit which again perform any function indicated by op_sel. However, in this case, the 8 outputs of these adder units are provided as pairs of inputs to 4 of the remaining adder units 1,5,9,d. These will typically perform a simple A+B operation before passing their respective outputs to the remaining 4 adder units, 3,7,b,f which can operate as in the Pooling 2 configuration. This pools the output of the tree twice as much as in the Pooling 2 configuration.

The first 2 layers of the Pooling 8 configuration are the same as in the Pooling 4 configuration. In this case, however, the 4 outputs from the second layer are provided as 2 pairs of inputs to adder units 3,b with the output of those units being passed to the remaining 2 adder units 7,f which can operate as in the Pooling 2 and 4 configurations.

Finally, the first 3 layers of the Pooling 16 configuration are the same as in the Pooling 8 configuration. In this case, however, the 2 outputs from the third layer are provided as a pair of inputs to adder unit 7 with the output of that unit being passed to the remaining adder unit f which can operate as in the Pooling 2, 4 and 8 configurations.

Switching between configurations can be controlled through multiplexing which directs the outputs of the various adder units as described above.

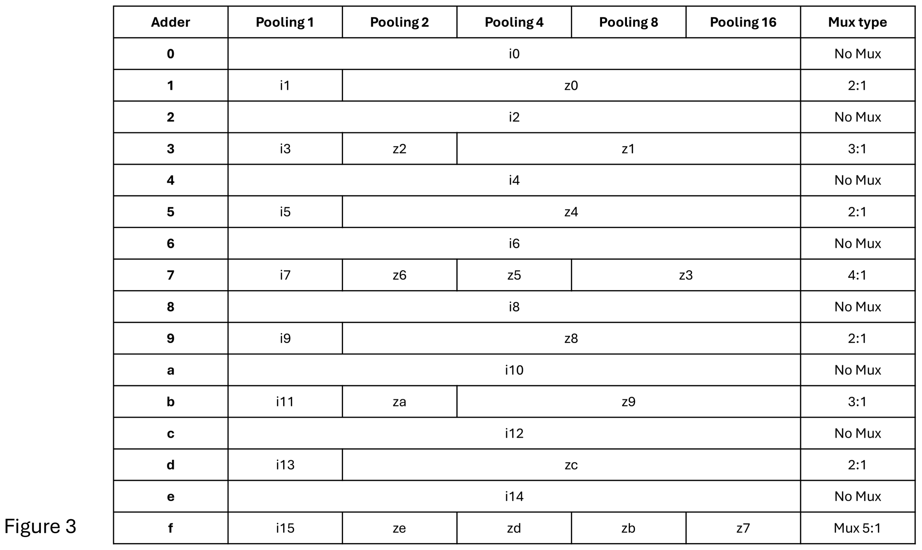

Figure 3, shows the multiplexing for Input "a" of each adder unit in the tree where:
- i0, i2, ... i15 are adder tree inputs; and
- z0, z1, ... zf are adder outputs (eg z3 is the output of adder 3)

It will be seen that in the embodiment, the input for adder units 0,2,4...e is always the same and so requires no switching. On the other hand, in the Pooling 1 configuration, the input for adder unit 1 is i1, whereas in all other configurations, the input is the output z0 of adder unit 0, so requiring 2:1 multiplexing. At the other extreme, the input for adder unit f can be any of i15 or the outputs ze,zd,zb,z7 of adder units e,d,b,7 depending on the configuration, so requiring 5:1 multiplexing.

The multiplexing for the Input "b" of each adder unit is analogous and this is shown in detail in relation to the embodiment of Figure 4.

In any case, such multiplexing requires relatively fewer resources than any adder unit, so providing for a highly configurable minimal set of adders capable of providing a variety of functions and configurations with little redundancy. Indeed, some of the functionality required for reconfiguring the adder tree, i.e. that node can either perform addition or a bypass function according to its layer within the adder tree are also the functions selectively performed by the tree as a whole.

Turning now to Figure 4, there is shown multiple configurations of adder tree within a processing element according to a second embodiment of the present invention. The fact that each addition performed by the adder unit 100 takes one clock cycle makes it possible to configure the final layer of the adder tree in any of the configurations described in relation to Figure 2 to selectively perform accumulation, by feeding back the output to one of the inputs. As such, in this embodiment, the output of selected adder units can be fed back as input b, in order to accumulate an output so that it can be maintained as required for further processing.

In this case, the multiplexing function for Input "A" of the adder units is as for the embodiment of Figure 2 and shown in Figure 3, whereas the multiplexing for Input "B" of the adder units is extended as shown in Figure 5 where:
- i0, i1, ... i15 are adder tree inputs;
- k0, k1, ... k15 are adder tree inputs (only used for pooling without accumulation); and
- z0, z1, ... zf are adder outputs (eg z3 is the output of adder 3).

Note that the multiplexing configuration for Input b of Figure 2 is as shown in Figure 5 for the case without accumulation.

Note that in the embodiments of Figures 2,3 and 4,5, as well as op_sel being different for different layers of the adder tree, both relu_en and abs_en can be set differently for respective units of the adder tree. So, typically these options would only be enabled for final layer adder units in any given configuration.

In any case, it should be appreciated how a processing element incorporating the adder trees described in the above embodiments can be configured in many useful ways to perform various operations, from element wise, Pooling 1 to Pooling 16, with or without accumulation. Additionally, the adder units that comprise the trees can be configured to perform operations other than just addition including subtraction, bypass, min, max. Indeed, it should be appreciated how the functionality explained in Figure 1 enabling the adder units to perform op_sel operations such as addition and bypass are also the functionality enabling the adder units to be reconfigured from one pooling configuration of adder tree to another.

The various configurations of adder tree can be employed in a variety of applications. So for example, the Pooling 1 configuration can be employed to process a single element of input data for multiple channels (in this case up to 16) in parallel. In such a case, multiple processing elements might be employed to process multiple elements of data, for example, an MxN convolution, for multiple channels in parallel.

Other use case examples of the adder tree are as follows:
- In configuration Pooling 1 with no accumulation, 16 parallel element wise operations can be performed (on two 16-element vectors)
- In configuration Pooling 16, with op_sel=Max(A,B), maximum pooling of a 16-element vector is performed
- In configuration Pooling 16, with op_sel=A+B, all elements of a vector are added together.
- In configuration Pooling 16, with op_sel=A or B (bypass), nearest neighbour pooling or decimation is performed.
- Similarly to the above examples, pooling 2, 4, and 8 operations can be done.

As indicated above, when the accumulation is not needed, rather than being "0" valued as shown in Figure 5 for configurations Pooling 2...Pooling 16, the otherwise unused input b of the final layer adder unit(s) can be used to add a constant value (e.g. bias value) to the adder unit output register 46.

As will be appreciated, the structures in the diagrams keep the number of the multiplexers required to reconfigure the adder tree at a minimum. For example, it can be seen that adder "3" gets one input from adder "1" for configurations Pooling 4, 8, 16.

## Claims

1. A processing element for a neural network comprising a plurality of adder units configurable into a one of a plurality of different tree configurations, each adder unit having two variable inputs and at least one control input determining a respective operation to be performed by the adder unit, the operation comprising one of: a sum or a comparison of said variable inputs, where in at least one of said configurations, a first sub-set of said plurality of adder units are provided in a first layer of a tree for receiving said variable inputs and for performing a selected operation on said inputs, said units being configurable to provide outputs to a second sub-set of adder units of the tree, with a final sub-set of adder units providing at least one output for the configuration of adder tree.

2. The processing element of claim 1 where in one configuration, said adder units are configured so that each adder unit receives variable inputs and provides a respective output for the adder tree.

3. The processing element of claim 1 where in one of said tree configurations, said first sub-set of adder units comprises half of said adder units and wherein said second and final sub-sets comprise the remaining adder units in common, the adder units of the second and final sub-set summing respective pairs of outputs from adder units of the first sub-set.

4. The processing element of claim 1 where in one of said tree configurations, said first sub-set of adder units comprises half of said adder units, wherein said second sub-set comprises half the remaining adder units and the final sub-set comprises the other half of the remaining adder units, the adder units of the second sub-set summing respective pairs of outputs from adder units of the first sub-set and providing their outputs to respective adder units of the final sub-set.

5. The processing element of claim 1 where in one of said tree configurations, said first sub-set of adder units comprises half of said adder units, wherein said second sub-set comprises half the remaining adder units, a third sub-set comprise half of the adder units outside the first and second sub-sets and the final sub-set comprises the remaining adder units, the adder units of the second sub-set summing respective pairs of outputs from adder units of the first sub-set and providing their outputs to respective adder units of the third sub-set, and the adder units of the third sub-set summing respective pairs of outputs from adder units of the second sub-set and providing their outputs to respective adder units of the final sub-set.

6. The processing element of claim 1 where in one of said tree configurations, said first sub-set of adder units comprises half of said adder units, wherein said second sub-set comprises half the remaining adder units, a third sub-set comprise half of the adder units outside the first and second sub-sets, a fourth sub-set comprise half of the adder units outside the first, second and third sub-sets, and the final sub-set comprises the or each remaining adder unit, the adder units of the second sub-set summing respective pairs of outputs from adder units of the first sub-set and providing their outputs to respective adder units of the third sub-set, the adder units of the third sub-set summing respective pairs of outputs from adder units of the second sub-set and providing their outputs to respective adder units of the fourth sub-set, and the adder units of the fourth sub-set summing respective pairs of outputs from adder units of the third sub-set and providing their outputs to respective adder units of the final sub-set.

7. The processing element of claim 1 comprising 16 adder units.

8. The processing element of claim 1 wherein each adder unit is controllable to provide either:
a maximum or a minimum of said input variables as an operation output;
a difference between said variables as an operation output; or
one of said input variables as an operation output.

9. The processing element of claim 1 wherein each adder unit is controllable to perform one or both of:
an activation function on an operation output generated by said adder unit;
an absolute value function on an operation output generated by said adder unit;
and to provide said function output as an output of said adder unit.

10. The processing element of claim 9 wherein in any tree configuration, only adder units of the final sub-set are configured to perform either an activation function or an absolute value function.

11. The processing element of claim 10 where in at least one tree configuration, adder units of said final sub-set are configured to provide a first input variable as an operation output and to add a second input variable to the output of either said activation function or said absolute value function as a bias value component of the output of said adder unit.

12. The processing element of claim 1 where in at least one tree configuration adder units of said final sub-set are configured to feedback their output to one of their variable inputs.

13. The processing element of claim 1 further comprising a plurality of multipliers, each multiplier being configured to multiply one element of input data with another element of input data and to provide its output to a respective variable input of an adder unit of said first sub-set of adder units.

14. The processing element of claim 1 wherein said variables comprise one of: floating point or integer numbers.

15. A processor for a neural network comprising a plurality of processing elements of claim 1, each processing element comprising a plurality of adder units being configurable to process a respective element of data for a plurality of channels in parallel.
